Europäisches Patentamt

European Patent Office

Office européen des brevets

(19)

(11) Veröffentlichungsnummer: **0 235 540**
**B1**

(12) **EUROPÄISCHE PATENTSCHRIFT**

(45) Veröffentlichungstag der Patentschrift: **14.11.90**

(51) Int. Cl.⁵: **F 16 F 13/00**

(21) Anmeldenummer: **87100887.6**

(22) Anmeldetag: **23.01.87**

(54) **Hydraulisch dämpfendes Lager.**

(30) Priorität: **30.01.86 US 824367**

(43) Veröffentlichungstag der Anmeldung:
**09.09.87 Patentblatt 87/37**

(45) Bekanntmachung des Hinweises auf die
Patenterteilung:
**14.11.90 Patentblatt 90/46**

(84) Benannte Vertragsstaaten:
**DE ES FR GB IT SE**

(56) Entgegenhaltungen:
**EP-A-0 115 417**
**DE-A-2 618 845**
**DE-A-2 727 244**
**DE-A-3 019 337**
**DE-A-3 405 907**
**DE-U-7 632 874**
**FR-A-2 508 582**
**US-A-3 013 583**

**PATENT ABSTRACTS OF JAPAN 8. Band, Nr.
152 (M-309) (1589) 14. Juli 1984;**

(73) Patentinhaber: **LORD CORPORATION**
**2000 West Grandview Boulevard P.O. Box 10038**
**Erie Pennsylvania 16514-0038 (US)**

(72) Erfinder: **Thorn, Richard Paul**
**3033 West 24th Street**
**Erie Pennsylvania 16506 (US)**

(74) Vertreter: **Seibert, Rudolf, Dipl.-Ing. et al**
**Tattenbachstrasse 9**
**D-8000 München 22 (DE)**

EP 0 235 540 B1

## Beschreibung

Die Erfindung bezieht sich auf ein hydraulisch dämpfendes Lager mit einer zumindest teilweise von einer gummielastischen Wandung umgebenen Arbeitskammer und einer Ausgleichskammer, die mit einer hydraulischen Flüssigkeit gefüllt sind und zwischen denen eine starre Trennwand angeordnet ist, die einen kreisbogenförmigen Überströmkanal zur hydraulischen Verbindung der beiden Kammern sowie eine zentrale, zwischen zwei gitterförmigen Platten angeordnete Entkopplungsvorrichtung aufweist.

Derartige Lager zur Schwingungsdämpfung, wie sie beispielsweise in der DE-A-30 19 337 beschrieben sind, erlangen für verschiedene Anwendungen zunehmende Bedeutung. So erfordert die Einführung von Kraftfahrzeugkomponenten mit leichterem Gewicht eine größere Präzision in der Beherrschung der durch die Antriebsaggregate und durch die Straßenbedingungen induzierten Schwingungen. Da sich derartige Schwingungsdämpfer exakt auf die geforderten Betriebsparameter auslegen lassen, haben sie sich als besonders brauchbar für die Lagerung von Motoren und Getrieben in modernen Kraftfahrzeugen gezeigt.

Diese Lager weisen im allgemeinen in der Trennwand einen langen Überströmkanal auf, wobei die Trägheitseffekte der in dem Kanal gespeicherten Flüssigkeitsmenge wesentlich den Dämpfungsverlauf bestimmen. Darüber hinaus ist in der Trennwand ein Entkopplungselement vorgesehen, um damit die dynamische Steifigkeit des Lagers beeinflussen zu können. Dieses Entkopplungselement kann entweder aus einer am Umfang eingespannten dünnen Membran bestehen oder aber — wie in der DE-A-27 27 244 gezeigt — aus einer scheibenförmigen Platte mit einem gewissen vertikalen Freiraum bestehen, wobei diese Entkopplungselemente mit dem Überströmkanal zusammenwirken und diesen automatisch mit den beiden Lagerkammern koppeln oder entkoppeln. Bei kleinen Schwingungsamplituden oszilliert das Entkopplungselement entsprechend den Schwingungen der Flüssigkeit zwischen den Kammern, wobei der Überströmkanal entkoppelt, d.h. in Ruhe ist. Bei größeren Schwingungsamplituden geringer Frequenz, bei denen das Entkopplungselement den Flüssigkeitsverschiebungen nicht mehr zu folgen vermag, wird das überflüssige Flüssigkeitsvolumen gezwungen, durch den Überströmkanal zu fließen, wodurch die beiden Kammern gekoppelt werden. Ein derartiger Lagertyp hat bei kleineren Schwingungsamplituden über einen breiten Bereich von Erregerfrequenzen eine relativ niedrige dynamische Steifigkeit und eine höhere dynamische Steifigkeit bei größeren Amplituden, wobei die Minima der dynamischen Steifigkeit bei bestimmten niedrigen und hohen Erregerfrequenzen liegen.

Entkopplungselemente aus starren, flachen Scheiben neigen jedoch dazu, bei bestimmten Betriebszuständen in ihren Halterungen abrupt auf ihrem Sitz aufzuschlagen und damit ein hörbares Betriebsgeräusch zu erzeugen.

Demgegenüber arbeiten Entkopplungselemente in Form einer gummielastischen Membran zwar geräuscharmer, sie neigen aber zu Materialermüdungen und sind darüber hinaus nicht so genau auf die gewünschten Betriebsparameter einstellbar wie starre Scheiben.

In diesem Zusammenhang ist es aus der FR-A-2 508 582 bekannt, zur Vermeidung von Turbulenzgeräuschen den Überstromkanal zwischen den beiden Lagerkammern mit einer offenzelligen, porösen Masse auszufüllen. Damit ist es jedoch nicht möglich, eine Entkopplung kleiner Schwingungsamplituden hoher Frequenz zu erreichen.

In der JP-A-59 047 541 ist dagegen ein Entkopplungselement beschrieben, das aus einer elastomeren Masse besteht, in die starre Teilchen aus einem schwereren Material eingebettet sind. Hierdurch soll lediglich eine zusätzliche Federwirkung erreicht werden.

In der EP-A-115 417 wird eine Entkopplungsmembran in Form eines geschlossenzelligen Schwammgummis verwendet. Schwingungen kleiner Amplitude sollen dabei durch Expansion oder Kontraktion der Zellen im Schwammgummi absorbiert werden.

Das DE-U-7 632 874 zeigt ein Zweikammer-Motorlager, bei dem der relativ großvolumige Überstromkanal mit Sintermetall gefüllt ist und damit eine bessere Drosselung und erhöhte Reibung während des Überstromvorganges zu erreichen ist. Hiermit soll also lediglich die Dämpfungswirkung des Lagers verbessert werden.

Schließlich ist es aus der US-A-3 013 583 bekannt in Ölförderleitungen Strömungsstabilisatoren in Form einer Füllung aus kugelförmigem Material einzusetzen, um damit die Strömung zu beeinflußen.

Demgegenüber liegt der vorliegenden Erfindung die Aufgabe zugrunde ein hydraulisch dämpfendes Lager mit einer Entkopplungsvorrichtung für hochfrequente Schwingungen kleiner Amplitude zu schaffen, die geräuscharm und zuverlässig arbeitet und darüberhinaus einfach und dauerhaft ohne Ermüdungserscheinungen aufgebaut ist.

Zur Lösung dieser Aufgabe ist erfindungsgemäß vorgesehen, daß die Entkopplungsvorrichtung aus einer losen Schüttung körniger Partikel besteht, die den Raum zwischen den beiden gitterförmigen Platten zumindest teilweise ausfüllen und deren Größe und Konsistenz so beschaffen ist, daß bei Schwingungen niedriger Amplitude einem Flüssigkeitsdurchtritt zwischen den dispergierten Partikeln hindurch nur ein geringer Widerstand entgegengesetzt wird, bei Schwingungen größer werdender Amplitude durch Kompaktierung der Partikel ein zunehmender Widerstand mit zunehmender Drosselung des Flüssigkeitsdurchtritts auftritt.

Damit wird eine Entkopplung des Überströmkanals bewirkt, indem die Partikel im dispergierten Zustand zwischen den beiden Platten frei schweben und einen Strömungsaustausch ermöglichen, während bei höheren Schwingungsamplituden die Partikel zusammengeballt werden und damit ein Flüssigkeitsaustausch über den Überströmkanal erfolgt. Die Kopplung und Entkopplung erfolgt dabei weich und geräuscharm.

Zweckmäßig ist es, wenn das spezifische Gewicht der Partikel in etwa dem der hydraulischen Flüssigkeit entspricht.

Dabei soll das freie Volumen zwischen den Partikeln weniger als 50% des Schüttungsvolumens betragen und das Schüttungsvolumen der Partikel weniger als 80% des Kammervolumens zwischen den beiden Platten ausfüllen.

Die Partikel selbst können dabei aus Glaskugeln, aus mineralischem Material oder aus Kunststoff bestehen. Es ist aber auch möglich, die Partikel aus elastomerem Material herzustellen.

Ferner können die Partikel aus starrem Material mit einer Hülle aus elastomerem Material bestehen, um eine bessere Absperrung der Flüssigkeit zu ermöglichen.

Zweckmäßigerweise haben die Partikel einen Durchmesser von 1 mm. Sie können regelmäßige oder unregelmäßige Form aufweisen.

Dabei ist es möglich, eine homogene Schüttung von Partikeln gleichen Materials, Form oder Größe oder aber auch eine inhomogene Schüttung von Partikeln unterschiedlichen Materials, Form und/oder Größe zu verwenden.

Anhand einer schematischen Zeichnung sind Aufbau und Wirkungsweise eines Ausführungsbeispiels nach der Erfindung näher erläutert. Dabei zeigen

Fig. 1 einen Längsschnitt durch ein hydraulisch dämpfendes Lager,

Fig. 2 einen Querschnitt durch dieses Lager entsprechend der Schnittlinie 2-2 nach Fig. 1 mit Blick auf die Trennwand,

Fig. 3A-3C Teillängsschnitte durch die Trennwand mit der Entkopplungsvorrichtung in verschiedenen Betriebsphasen und

Fig. 4 eine graphische Darstellung über den Verlauf der dynamischen Steifigkeit bei verschiedenen Schwingungsamplituden.

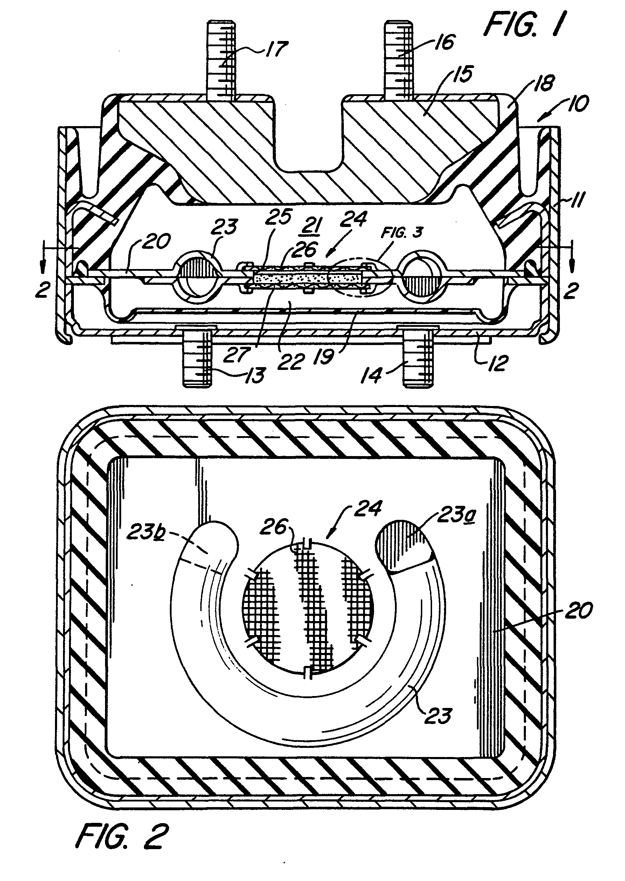

Wie man aus Fig. 1 ersieht, weist das hydraulisch dämpfende Lager 10 eine obere motorseitige Arbeitskammer 21 und eine untere Ausgleichskammer 22 auf, die mit einer hydraulischen Flüssigkeit gefüllt sind und über einen Überströmkanal 23 in einer Trennwand 20 hydraulisch miteinander in Verbindung stehen. Die Arbeitskammer 21 wird dabei von einer starkwandigen, angenähert hohlkegelförmigen Wandung 18 aus gummielastischem Material begrenzt, die an der oberen Stirnseite von einer Motorlagerplatte 15 mit aufgesetzten Gewindebolzen 16 und 17 zum Anschluß eines nicht näher dargestellten Motors abgeschlossen und am Außenumfang mit der Innenseite einer zylindrischen Gehäusewandung 11 haftend verbunden ist. Die Ausgleichskammer 22 ist von einer flexiblen Wandung 19 aus elastomerem Material umschlossen und auf ihrer Außenseite von der Bodenwandung 12 des Gehäuses 11 abgedeckt.

Diese starre Bodenwandung 12 trägt dabei eine Vielzahl von Gewindebolzen 13 und 14, die zur Montage beispielsweise an der Karosserie des Fahrzeugs dienen.

Wie man insbesondere aus Fig. 2 ersieht, ist der Überströmkanal 23 kreisbogenförmig gekrümmt und weist über seine Länge im wesentlichen einen gleichbleibenden kreisförmigen Querschnitt auf. Dieser Überströmkanal 23 ist an einem Ende mit einer Öffnung 23a mit der Arbeitskammer 21 und am anderen Ende über eine Öffnung 23b mit der Ausgleichskammer 22 verbunden. Die Abmessungen dieses Überströmkanals bestimmen die Masse des in ihm enthaltenen Flüssigkeitsvolumens und damit die Resonanzfrequenz der Flüssigkeit im Lager 10.

Im Betrieb eines solchen Lagers bewirkt eine Schwingungsbewegung der oberen Lagerplatte 15 relativ zur Trennwand 20 ein Schwingen der Flüssigkeit im Überströmkanal 23 zwischen den Kammern 21 und 22. Ein derartiges Lager kann dabei ein Minimum an dynamischer Steifigkeit bei einer relativ niedrigen Anregungsfrequenz über ein relativ schmales Frequenzband aufweisen. Für viele Anwendungen ist es jedoch wünschenswert, daß der Überströmkanal 23 bei kleinen Schwingungsamplituden inaktiv bzw. entkoppelt bleibt, aber aktiv und gekoppelt bei höheren Amplituden über einen größeren Frequenzbereich.

Ein derartiges Betriebsverhalten wird im allgemeinen durch eine Entkopplungsvorrichtung 24 bewirkt, die nach der vorliegenden Erfindung folgendermaßen aufgebaut ist:

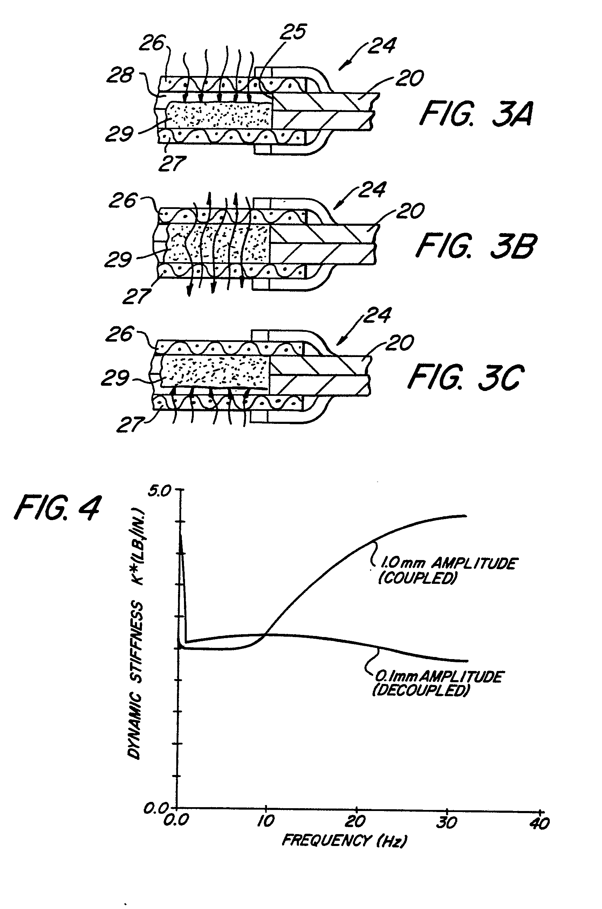

Die Trennwand 20 weist radial innerhalb des Überströmkanals 23 eine durchgehende Öffnung 25 auf, über die ein direkter Flüssigkeitsaustausch zwischen der oberen Arbeitskammer 21 und der unteren Ausgleichskammer 22 ermöglicht wird. Diese Öffnung 25 überdeckend ist ein oberes und ein unteres Sieb 26 bzw. 27 oder eine gelochte Platte auf der Trennwand 20 montiert und definiert damit einen dazwischenliegenden Hohlraum 28 (siehe auch Fig. 3A). Innerhalb des Hohlraums 28 ist eine Schüttung loser Partikel 29 eingebracht, die im Ruhezustand vorzugsweise nicht mehr als etwa 80% des Hohlraumvolumens einnimmt. Diese Partikel 29 sind an sich lose im Hohlraum 28 verteilt; sie können dabei zur Regelung der durch die Öffnung 25 strömenden Flüssigkeit verdrängt werden und zwar zwischen dem in Fig. 3A und 3C dargestellten kompaktierten Zustand und der in Fig. 3B gezeigten dispergierten Anordnung.

Das spezifische Gewicht der Partikel soll dabei vorzugsweise dem spezifischen Gewicht der in den Kammern enthaltenen hydraulischen Flüssigkeit entsprechen. Diese Flüssigkeit besteht zweckmäßigerweise aus Wasser mit Frostschutzzusätzen, wie Äthylenglykol oder dergleichen. Damit weisen die Partikel ein spezifisches Gewicht von etwa 1 g/cm³ auf. Als bevorzugtes Material für diese Partikel dient Glas, Kunststoff, Elastomer oder Mineralstoffe verschiedener regelmäßiger oder unregelmäßiger Formen einschließlich kugelförmiger, flächiger oder polygonaler Konfiguration.

Wenn sich jetzt entsprechend Fig. 3A die Partikelmasse 29 im kompaktierten Zustand an das untere Sieb 27 anlagert, dann wird die Strömung durch die Trennwand 20 zwischen der oberen und unteren Kammer 21 und 22 durch die Partikelmasse 29 praktisch vollständig blockiert und statt dessen über den Überströmkanal 23 gekoppelt. Befinden sich die Partikel 29 in dem in Fig. 3B dargestellten dispergierten Zustand, dann kann die Flüssigkeit direkt zwischen oberer und unterer Kammer 21 und 22 schwingen, wobei der Überströmkanal 23 effektiv entkoppelt ist. Wenn die Partikel entsprechend Fig. 3C am oberen Sieb 26 angelagert sind, ist wiederum die Strömung durch die Öffnung 25 hindurch blockiert und damit der Überströmkanal 23 gekoppelt. Eine vollständige Blockierung der Flüssigkeitsströmung durch die Entkopplungsvorrichtung 24 ist zwar erwünscht, es ist jedoch auch ein geringfügiges Durchsickern zulässig, vorausgesetzt, daß zumindest für bestimmte Anwendungen ein ausreichendes Druckgefälle über die Partikel 29 hin vorhanden ist.

Um ein zufriedenstellendes Absperren des Flüssigkeitsstromes durch die Partikel 29 zu erreichen, dürfen die Partikel in kompaktierter Lage nur ein bestimmtes freies Volumen zwischen den einzelnen Partikeln aufweisen. In Tests, die mit Partikeln aus Glaskugeln mit 1 mm Durchmesser durchgeführt wurden, betrug das freie Volumen etwa 30 bis 50% des Schüttungsvolumens der Glaskugeln, wobei die Entkopplung zufriedenstellend funktionierte. Bei einem größeren, freien Volumen besteht die Gefahr, daß die Strömung nicht ausreichend abgesperrt wird. Aber auch andere Partikelmaterialien, die eine gleichwertige Strömungsabsperrung gewährleisten, können ohne weiteres angewendet werden.

In den dargestellten Ausführungsbeispielen sind die Partikel zwischen einem Paar gelochter Platten oder Siebe 26 und 27 enthalten, wobei die Lochgröße kleiner als die Partikelgröße sein muß, damit die Partikel nicht verlorengehen. Es ist aber auch möglich, andere gelochte oder perforierte Mittel zu verwenden, wie beispielsweise Labyrinthe, Schaumstoffe, Schlitze oder dergleichen, vorausgesetzt, daß sich beim Zurückströmen der Flüssigkeit die Partikel leicht von ihnen trennen können.

Die Partikelmasse kann ein homogenes oder nichthomogenes Gemisch verschiedener Partikeltypen umfassen. Ein solches Gemisch kann beispielsweise Glasperlen, Kunststoffperlen und Elastomerpartikel enthalten. Es kann auch aus Partikeln unterschiedlicher Größe und/oder Form bestehen, einschließlich flacher, unregelmäßig geformter Blättchen oder scheibenförmiger Partikel. Kunststoffperlen und/oder massive oder hohle Glasperlen können ebenfalls verwendet werden. Gegebenenfalls können die Glasperlen auch mit Elastomermaterial beschichtet werden, um damit die Blockierung der Strömung zu verbessern. Schließlich können die Siebe mit Verstärkungsrippen und/oder entsprechend einer vorgegebenen Steifigkeit hergestellt werden, die mit der Steifigkeit der Partikelmasse kombiniert werden kann, um damit ein erwünschtes Verhalten der Strömungsregulierung zu gewährleisten.

Ein entsprechend der Erfindung ausgebildetes, hydraulisch dämpfendes Lager ist gebaut und getestet worden. Bei diesem Lager, das nur als Beispiel ohne Beschränkung anderer Ausführungsformen dargestellt wird, wurde in der Trennwand eine zentrale Öffnung mit einem Durchmesser von 30,5 mm vorgesehen, die auf beiden Seiten mit einem Bronzegitter mit einer Maschenweite von 0,4 bis 0,6 mm abgedeckt war. Der dazwischenliegende Hohlraum wurde zu 80% mit kugelförmigen Glasperlen von 1 mm Durchmesser gefüllt. Die nachfolgenden Prüfungen sollten die Gebrauchstüchtigkeit bei verschiedenen Schwingungsamplituden über verschiedene Frequenzbereiche ermitteln. Dabei wurde die komplexe dynamische Steifigkeit (K*) bestimmt und dargestellt.

Wie man dazu aus dem Diagramm nach Fig. 4 ersieht, bei dem über der Frequenz die dynamische Steifigkeit aufgetragen ist, hatte das Lager bei niedrigen Schwingungsfrequenzen (unter etwa 10 Hz) die gleiche Steifigkeit bei Amplituden von 1,0 und 0,1 mm. Das deutet darauf hin, daß bei niedrigen Frequenzen der Überströmkanal 23 entkoppelt war und die Flüssigkeit einfach in der Öffnung 25 zwischen oberer und unterer Kammer 21 und 22 oszillierte.

Bei Zunahme der Schwingungsfrequenz über etwa 10 Hz blieb der Überströmkanal bei einer Amplitude von 0,1 mm entkoppelt, d.h. geschlossen. Bei größeren Amplituden von etwa 1 mm stieg dagegen die komplexe Steifigkeit des Lagers merklich an, was darauf hindeutet, daß die Partikel 29 die Strömung durch die Öffnung 25 hindurch drosselten und damit den Überströmkanal 23 mit den Kammern 21 und 22 koppelten. Ähnliche Ergebnisse wurden mit bei Tieftemperatur geschliffenen Gummipartikeln gleicher Größe erreicht.

Während der Versuchsreihen wurde durch die Bewegung der Partikel und ihrer Kompaktierung innerhalb des durch die Siebe begrenzten Hohlraumes kein hörbares Geräusch erzeugt. Das Lager ist also nicht nur geräuscharm im Betrieb, sondern auch beständig gegen Funktionseinschränkungen aufgrund von Materialermüdungen, so daß es nicht den Funktionsbeschränkungen einer Entkopplungsvorrichtung mittels Membran oder starrer Scheibe unterworfen ist.

## Patentansprüche

1. Hydraulisch dämpfendes Lager (10) mit einer zumindest teilweise von einer gummielastischen Wandung (18) umgebenen Arbeitskammer (21) und einer Ausgleichskammer (22), die mit einer hydraulischen Flüssigkeit gefüllt sind und zwischen denen eine starre Trennwand (20) angeordnet ist, die einen kreisbogenförmigen Überströmkanal (23) zur hydraulischen Verbindung der beiden Kammern (21, 22) sowie eine zentrale, zwischen zwei gitterförmigen Platten (26, 27) angeordnete Entkopplungsvorrichtung (24) aufweist, dadurch gekennzeichnet, daß die Entkopplungsvorrichtung (24) aus einer losen Schüttung körniger Partikel (29) besteht, die den Raum (28) zwischen den beiden gitterförmigen Platten (26, 27) zumindest teilweise ausfüllen und deren Größe und Konsistenz so beschaffen ist, daß bei Schwingungen niedriger Amplitude einem Flüssigkeitsdurchtritt zwischen den dispergierten Partikeln (29) hindurch nur ein geringer Widerstand entgegengesetzt wird, bei Schwingungen größer werdender Amplitude durch Kompaktierung der Partikel ein zunehmender Widerstand mit zunehmender Drosslung des Flüssigkeitsdurchtritts auftritt.

2. Hydraulisch dämpfendes Lager nach Anspruch 1, dadurch gekennzeichnet, daß das spezifische Gewicht der Partikel (29) in etwa dem der hydraulischen Flüssigkeit entspricht.

3. Hydraulisch dämpfendes Lager nach Anspruch 1 oder 2, dadurch gekennzeichnet, daß das freie Volumen zwischen den Partikeln (29) weniger als 50% des Schüttungsvolumens beträgt.

4. Hydraulisch dämpfendes Lager nach Anspruch 1 bis 3, dadurch gekennzeichnet, daß das Schüttungsvolumen der Partikel (29) weniger als 80% des Kammervolumens (28) zwischen den beiden Platten (26, 27) ausfüllt.

5. Hydraulisch dämpfendes Lager nach Anspruch 1 bis 4, dadurch gekennzeichnet, daß die Partikel (29) aus Glaskugeln bestehen.

6. Hydraulisch dämpfendes Lager nach Anspruch 1 bis 4, dadurch gekennzeichnet, daß die Partikel aus mineralischem Material oder aus Kunststoff bestehen.

7. Hydraulisch dämpfendes Lager nach Anspruch 1 bis 4, dadurch gekennzeichnet, daß die Partikel aus elastomerem Material bestehen.

8. Hydraulisch dämpfendes Lager nach Anspruch 5 bis 7, dadurch gekennzeichnet, daß die Partikel aus starrem Material mit einer Hülle aus elastomerem Material bestehen.

9. Hydraulisch dämpfendes Lager nach einem der Ansprüche 5 bis 8, dadurch gekennzeichnet, daß die Partikel einen Durchmesser von etwa 1 mm aufweisen.

10. Hydraulisch dämpfendes Lager nach einem der Ansprüche 5 bis 9, dadurch gekennzeichnet, daß die Partikel unregelmäßige Form aufweisen.

11. Hydraulisch dämpfendes Lager nach Anspruch 9, gekennzeichnet durch eine homogene Schüttung von Partikeln gleichen Materials, Form und Größe.

12. Hydraulisch dämpfendes Lager nach Anspruch 9 und 10, gekennzeichnet durch eine inhomogene Schüttung von Partikeln unterschiedlichen Materials, Form und/oder Größe.

**Revendications**

1. Support (10) à amortissement hydraulique, comprenant une chambre de travail (21) entourée au moins partiellement d'une paroi (18) ayant l'élasticité du caoutchouc et une chambre de compensation (22), qui sont emplies d'un liquide hydraulique et entre lesquelles est montée une cloison de séparation (20) rigide, qui comporte un canal de passage (23) en forme d'arc-de-cercle pour mettre en communication hydraulique les deux chambres (21, 22), ainsi qu'un dispositif de découplage (24) disposé dans la partie centrale entre deux plaques (26, 27) en forme de grille, caractérisé en ce que le dispositif de découplage (24) est constitué d'un tas lâche de particules (29) en grains qui emplissent au moins partiellement l'espace (28) compris entre les deux plaques (26, 27) en forme de grille et dont la dimension et la consistance sont telles que, dans le cas d'oscillations de faible amplitude, une faible résistance seulement s'oppose au passage du liquide entre les particules (29) dispersées, tandis que dans le cas d'oscillations d'amplitude devenant plus grandes, il se produit, par tassement des particules, une résistance croissante, avec étranglement croissant du passage pour le liquide.

2. Support à amortissement hydraulique suivant la revendication 1, caractérisé en ce que la masse volumique des particules (29) correspond à peu près à celle du liquide hydraulique.

3. Support à amortissement hydraulique suivant la revendication 1 ou 2, caractérisé en ce que le volume libre entre les particules (29) représente moins de 50% du volume du tas.

4. Support à amortissement hydraulique suivant l'une des revendications 1 à 3, caractérisé en ce que le volume du tas des particules (29) remplit moins de 80% du volume de la chambre (28) entre les deux plaques (26, 27).

5. Support à amortissement hydraulique suivant l'une des revendications 1 à 4, caractérisé en ce que les particules (29) sont constituées de billes de verre.

6. Support à amortissement hydraulique suivant l'une des revendications 1 à 4, caractérisé en ce que les particules sont en matière minérale ou en matière plastique.

7. Support à amortissement hydraulique suivant l'une des revendications 1 à 4, caractérisé en ce que les particules sont en un matériau élastomère.

8. Support à amortissement hydraulique suivant l'une des revendications 5 à 7, caractérisé en ce que les particules sont en un matériau rigide ayant une enveloppe en matériau élastomère.

9. Support à amortissement hydraulique suivant l'une des revendications 5 à 8, caractérisé en ce que les particules ont un diamètre de 1 mm environ.

10. Support à amortissement hydraulique suivant l'une des revendications 5 à 9, caractérisé en ce que les particules présentent une forme irrégulière.

11. Support à amortissement hydraulique suivant la revendication 9, caractérisé par un tas homogène de particules en le même matériau, de même forme et de la même dimension.

12. Support à amortissement hydraulique suivant la revendication 9 ou 10, caractérisé par un tas hétérogène de particules de matériaux, de forme et/ou de dimensions différents.

## Claims

1. A hydraulic-damping bearing (10) comprising a working chamber (21), which is surrounded at least partially by a rubber-elastic wall (18), and a compensating chamber (22), which are filled with a hydraulic fluid and between which a rigid partition wall (20) is arranged which includes a circular-arc-shaped overflow channel (23) which hydraulically connects the two chambers (21, 22), and a central decoupling device (24) which is arranged between two grid-like plates (26, 27), characterised in that the decoupling device (24) comprises a loose filling of granular particles (29) which at least partially fill the space (28) between the two grid-like plates (26, 27) and whose size and consistency are such that at low-amplitude vibrations the passage of fluid between the dispersed particles (29) is opposed by only a small resistance whilst in the case of vibrations of increasing amplitude, as a result of the compacting of the particles, an increase in resistance together with increasing throttling of the passage of fluid takes place.

2. A hydraulic-damping bearing as claimed in Claim 1, characterised in that the specific weight of the particles (29) corresponds approximately to that of the hydraulic fluid.

3. A hydraulic-damping bearing as claimed in Claim 1 or 2, characterised in that the free volume between the particles (29) amounts to less than 50% of the filling volume.

4. A hydraulic-damping bearing as claimed in Claims 1 to 3, characterised in that the filling volume of the particles (29) occupies less than 80% of the chamber volume (28) between the two plates (26, 27).

5. A hydraulic-damping bearing as claimed in Claims 1 to 4, characterised in that the particles (29) are composed of glass spheres.

6. A hydraulic-damping bearing as claimed in Claims 1 to 4, characterised in that the particles consist of mineral material or synthetic resin.

7. A hydraulic-damping bearing as claimed in Claims 1 to 4, characterised in that the particles consist of elastomeric material.

8. A hydraulic-damping bearing as claimed in Claims 5 to 7, characterised in that the particles consist of rigid material with a casing of elastomeric material.

9. A hydraulic-damping bearing as claimed in one of Claims 5 to 8, characterised in that the particles have a diameter of about 1 mm.

10. A hydraulic-damping bearing as claimed in one of Claims 5 to 9, characterised in that the particles are of irregular shape.

11. A hydraulic-damping bearing as claimed in Claim 9, characterised by a homogeneous filling of particles of the same material, shape and size.

12. A hydraulic-damping bearing as claimed in Claims 9 and 10, characterised by an heterogeneous filling of particles of different materials, shape and/or size.

FIG. 1

FIG. 3

FIG. 2

1

FIG. 3A

FIG. 3B

FIG. 3C

FIG. 4

DYNAMIC STIFFNESS $K^*$ (LB./IN.)

1.0 mm AMPLITUDE (COUPLED)

0.1 mm AMPLITUDE (DECOUPLED)

FREQUENCY (Hz)